(19) Europäisches Patentamt

European Patent Office

Office européen des brevets

(11) **EP 1 328 743 B1**

(12) **EUROPÄISCHE PATENTSCHRIFT**

(45) Veröffentlichungstag und Bekanntmachung des Hinweises auf die Patenterteilung:
**24.05.2006   Patentblatt 2006/21**

(21) Anmeldenummer: **01986753.0**

(22) Anmeldetag: **11.10.2001**

(51) Int Cl.:
*F16K 1/22* (2006.01)          *F02D 9/10* (2006.01)

(86) Internationale Anmeldenummer:
**PCT/DE2001/003866**

(87) Internationale Veröffentlichungsnummer:
**WO 2002/031387 (18.04.2002 Gazette 2002/16)**

(54) **DROSSELKLAPPENSTUTZEN**

THROTTLE-VALVE ASSEMBLY

MANCHON A PAPILLON

(84) Benannte Vertragsstaaten:
**DE FR GB IT**

(30) Priorität: **12.10.2000   DE 10050408**

(43) Veröffentlichungstag der Anmeldung:
**23.07.2003   Patentblatt 2003/30**

(73) Patentinhaber: **SIEMENS AKTIENGESELLSCHAFT
80333 München (DE)**

(72) Erfinder: **KOHLEN, Peter
61267 Neu-Anspach (DE)**

(56) Entgegenhaltungen:
**DE-A- 4 429 956          DE-A- 19 704 012
JP-A- 7 293 712          US-A- 5 203 539
US-A- 5 615 861**

## Beschreibung

Die Erfindung bezieht sich auf einen Drosselklappenstutzen mit einem Gehäuse, das eine von einem gasförmigen Medium in einer Hauptströmungsrichtung durchströmbare durchgehende Drosselöffnung aufweist, wobei in der Drosselöffnung eine auf einer Drosselklappenwelle schwenkbar befestigte Drosselklappe angeordnet ist, wobei die Drosselklappenwelle von einem in dem Gehäuse angeordneten Stellantrieb verschwenkbar ist, wobei ausgehend von der Drehachse der Drosselklappenwelle stromabwärts entlang der Hauptströmungsrichtung des gasförmigen Mediums die Drosselöffnung einen annähernd geraden Zylinderabschnitt mit einer Höhe $H_1$ und einem Radius $R_Z$ aufweist und wobei sich an den annähernd geraden Zylinderabschnitt ein Kalottenabschnitt anschließt. Derartige Drosselklappenstutzen sind z.B. durch die US-A-5,203,539 bekannt.

Zur Steuerung der Frischgasmenge eines Kraftfahrzeugs werden üblicherweise Drosselklappenstutzen eingesetzt. Drosselklappenstutzen umfassen ein Gehäuse mit einer Drosselöffnung und ein in der Drosselöffnung angeordnetes Drosselorgan. Das Drosselorgan nimmt für den Durchlass einer bestimmten Frischgasmenge eine bestimmte Stellung in der Drosselöffnung ein. Hierzu ist das Drosselorgan mechanisch oder elektronisch ansteuerbar.

Gehäuse von Drosselklappenstutzen werden üblicherweise aus Kunststoff oder aus Metall hergestellt. Gehäuse von Drosselklappenstutzen die aus Metall, beispielsweise Aluminium, gefertigt sind, können besonders geringe Toleranzen aufweisen. Geringe Toleranzen sind insbesondere dann für einen Drosselklappenstutzen im Bereich der Drosselklappe erforderlich, wenn die durch die Drosselöffnung des Drosselklappenstutzens hindurchtretende Menge an Strömungsmedium schon durch eine besonders geringe Bewegung der Drosselklappe beeinflußbar sein soll. Im Schließbereich der Drosselklappe werden diese Anforderungen auch Leckluftanforderungen genannt. Metallgehäuse von Drosselklappenstutzen weisen jedoch den Nachteil auf, daß nach einer Herstellung des Gehäuses, beispielsweise im Druckgußverfahren, eine aufwendige Nachbearbeitung des Gehäuses erforderlich ist. Beispielsweise ist eine Nachbearbeitung von Gehäusen aus Aluminium notwendig, um die im und am Gehäuse vorgesehenen funktionalen Anforderungen zu gewährleisten. Funktionale Anforderungen sind insbesondere der Durchströmungskanal, die Aufnahme für den Stellantrieb und Getriebeachsabstände. Auch ist üblicherweise eine genaue Bearbeitung der Lagersitze notwendig, da erst durch den Preßsitz am Nadellager das richtige Betriebsspiel (Lagerluft) hergestellt wird.

Aus Kunststoff gefertigte Gehäuse von Drosselklappenstutzen weisen ein geringeres Gewicht auf als Gehäuse von Drosselklappenstutzen, die im wesentlichen aus Metall, insbesondere Aluminium, gefertigt sind.

Weiterhin ist auch das Material Kunststoff besonders einfach an verschiedenste geometrische Ausprägungen des Gehäuses anpaßbar. Bei im Spritzgußverfahren hergestellten Kunststoffgehäusen können außerdem Einsätze, beispielsweise Lager für die Lagerung der Drosselklappenwelle, in die für das Gehäuse vorgesehene Spritzgußform eingelegt und mit Kunststoff umspritzt werden.

Die Drosselöffnung eines Drosselklappenstutzens weist üblicherweise einen annähernd zylinderförmigen Querschnitt auf. Bedingt durch den annähernd zylinderförmigen Querschnitt der Drosselöffnung stellt sich über den Arbeitsbereich der Drosselklappe beim Öffnen der Drosselklappe eine stetige Zunahme der Durchflußmenge des Strömungsmediums ein. Dies kann sich als nachteilig erweisen, wenn die Drosselklappe und die Drosselöffnung einen besonders großen Durchmesser, beispielsweise 90mm oder mehr, aufweisen. Denn ab einem bestimmten Öffnungswinkel der Drosselklappe ändert sich pro Zeiteinheit, insbesondere bei einem besonders großen Durchmesser der Drosselklappe, nur noch in besonders geringem Maße bei einer Veränderung der Stellung der Drosselklappe die durch die Drosselöffnung hindurchtretende Masse an Strömungsmedium, wodurch eine fein abgestufte Steuerung der Leistung des Kraftfahrzeugs ab einem bestimmten Öffnungswinkel der Drosselklappe nicht mehr möglich ist.

Der Erfindung liegt daher die Aufgabe zugrunde, einen Drosselklappenstutzen der oben genannten Art anzugeben, der beim Betrieb des Drosselklappenstutzens, insbesondere für Drosselklappen mit einem besonders großen Durchmesser, eine fein abgestufte Steuerung des durch die Drosselöffnung hindurchtretenden Mediums zuverlässig gewährleistet.

Diese Aufgabe wird erfindungsgemäß dadurch gelöst, daß der Kalottenabschnitt einen Mittelpunkt aufweist, der ausgehend von der Drehachse der Drosselklappenwelle stromabwärts entlang der Hauptströmungsrichtung des gasförmigen Mediums um einen Abstand $H_2$ verschoben ist, wobei der Kalottenabschnitt einen Radius $R_K$ aufweist, der annähernd durch die folgende Gleichung bestimmt ist:

$$R_K = \left[ R_Z{}^2 + (H_1 - H_2)^2 \right]^{1/2}.$$

Die Erfindung geht dabei von der Überlegung aus, daß ein Drosselklappenstutzen, der beim Betrieb des Drosselklappenstutzens, insbesondere für Drosselklappen mit einem besonders großen Durchmesser, eine fein abgestufte Steuerung des durch die Drosselöffnung hindurchtretenden Mediums zuverlässig gewährleistet, mit einem besonders geringen Herstellungsaufwand zu erstellen sein sollte. Daher sollte die Drosselklappe in ihrer Form und Gestaltung unverändert bleiben, um aus Kostengründen weiterhin Standard-Drosselklappen in den Drosselklappenstutzen einbauen zu können. Da das Gehäuse eines Drosselklappenstutzens üblicherweise an spezifische Einbauanforderungen angepaßt wird, sollte mittels einer speziellen Formgebung der Drosselöffnung eine fein abgestufte Steuerung des durch die Drosselöffnung beim Betrieb des Drosselklappenstutzens hindurchtretenden Mediums zuverlässig gewährleistet sein. Neben der einfachen Zylinderform der Drosselöffnung läßt sich eine Kalotte besonders einfach in die Drosselöffnung eines Drosselklappenstutzens einprägen. Als Parameter für die Gestaltung der Kalotte stehen hierbei Radius der Kalotte und Abstand des Mittelpunkts der Kalotte zum Mittelpunkt der Drosselklappenwelle zur Verfügung. Umfangreiche Überlegungen und Berechnungen führten zu dem überraschenden Ergebnis, daß eine Verschiebung des Mittelpunkts der Kalotte relativ zum Mittelpunkt der Drosselklappenwelle geknüpft an eine Bedingung für den Radius der Kalotte dazu führt, daß auch für Drosselklappen mit einem besonders großen Durchmesser eine feinfühlige Steuerung des durch die Drosselöffnung hindurchtretenden Mediums zuverlässig gewährleistet ist.

Vorteilhafterweise weist ausgehend von der Drehachse der Drosselklappenwelle stromaufwärts entgegen der Hauptströmungsrichtung des gasförmigen Mediums die Drosselöffnung einen annähernd geraden Zylinderabschnitt mit einer Höhe $G_1$ und einem Radius $P_Z$ auf, wobei sich an den annähernd geraden Zylinderabschnitt ein Kalottenabschnitt anschließt, wobei der Kalottenabschnitt einen Mittelpunkt aufweist, der ausgehend von der Drehachse der Drosselklappenwelle stromaufwärts entlang der Hauptströmungsrichtung des gasförmigen Mediums um einen Abstand $G_2$ verschoben ist, wobei der Kalottenabschnitt einen Radius $P_K$ aufweist, der annähernd durch die folgende Gleichung bestimmt ist:

$$P_K = [P_Z{}^2 + (G_1 - G_2)^2]^{1/2}.$$

Die Kennlinie längs des Drosselklappenstutzens läßt sich zusätzlich dadurch abflachen, daß sowohl stromabwärts als auch stromaufwärts von der Drehachse der Drosselklappenwelle aus die Drosselöffnung einen Kalottenabschnitt aufweist, wobei der Radius beider Kalotten von dem Mittelpunkt der Drosselklappenwelle beabstandet ist und der Radius der Kalotten zumindest einer der oben angegebenen Gleichungen genügt.

Vorteilhafterweise ist der Wert von $R_Z$ gleich dem Wert von $P_Z$ und der Wert von $R_K$ gleich dem Wert von $P_K$. Eine relativ zur Schließstellung der Drosselklappe symmetrisch ausgeführte Drosselöffnung eines Drosselklappenstutzens ist mit besonders geringem Aufwand herzustellen. Dabei ist über die Parameter $H_1$, $H_2$ und $R_Z$ der jeweilige Drosselklappenstutzen an spezifische Anforderungen des jeweiligen Kraftfahrzeugs anpaßbar.

Vorteilhafterweise ist das Gehäuse im Spritzgußverfahren hergestellt und besteht überwiegend aus Kunststoff, wobei zumindest der gerade Zylinderabschnitt im Bewegungsbereich der Drosselklappe durch einen in das Gehäuse eingespritzten Metalleinsatz gebildet ist. Ein Metalleinsatz für ein Kunststoffgehäuse läßt sich mit geringeren Toleranzen fertigen, als dies für ein Gehäuse aus Kunststoff möglich ist. Daher zeichnet sich zum Erzielen einer vorgegebenen Kennlinie eine Drosselöffnung aus, die aus Metall gebildet ist. Um nun aber gleichzeitig eine Drosselöffnung mit besonders geringen Toleranzen und ein besonders geringes Gewicht des Drosselklappenstutzens zu gewährleisten, ist nur der Bereich der Drosselöffnung, der für die Kennlinie relevant ist, aus Metall gefertigt, wobei der übrige Bereich des Gehäuses überwiegend oder vollständig aus Kunststoff besteht.

Vorteilhafterweise ist der Kalottenabschnitt durch einen in das Gehäuse integrierten Metalleinsatz gebildet. Hierdurch ist mit besonders geringem Aufwand für jeden Typ von Drosselklappenstutzen eine individuelle Kalottenform realisierbar.

Vorteilhafterweise sind sowohl der Zylinderabschnitt als auch der Kalottenabschnitt durch einen einstückigen Metalleinsatz gebildet. Dadurch treten zwischen dem annähernd geraden Zylinderabschnitt im Bewegungsbereich der Drosselklappe und dem Kalottenabschnitt keine Dichtungsprobleme auf. Zudem könnten durch Unebenheiten im Grenzbereich zwischen dem annähernd geraden Zylinderabschnitt im Bewegungsbereich der Drosselklappe und dem Kalottenabschnitt Verwirbelungen des beim Betrieb des Drosselklappenstutzens durch die Drosselöffnung hindurchtretenden gasförmigen Mediums auftreten, die sich negativ auf die Kennlinie der Drosselklappe auswirken könnten.

Vorteilhafterweise ist der Metalleinsatz zur Aufnahme für die Lager der Drosselklappenwelle ausgebildet. Dadurch sind die Lager in die mechanische Stabilität des Metalleinsatzes integriert. Durch diese Anordnung der Lager ist die Drosselklappenwelle besonders stabil in dem Metalleinsatz gelagert.

Vorteilhafterweise ist für die Drosselklappenwelle eine Positionserfassungeinrichtung vorgesehen, wobei für die Positionserfassungseinrichtung in den Metalleinsatz eine Aufnahme integriert ist. Hierbei gewährleistet die mechanische Stabilität des Metalleinsatzes einen besonders guten Halt der Positionserfassungseinrichtung in dem Gehäuse des Drosselklappenstutzens. Gleichzeitig kann zusätzlich über die in dem Metalleinsatz vorgesehene Aufnahme die Positionserfassungseinrichtung relativ zur Drosselklappenwelle vorjustiert werden, wodurch die für die Positionserfassungseinrichtung erforderlichen Justagearbeiten ein besonders geringes Maß aufweisen. Dabei kann die Positionserfassungseinrichtung schon bei der Integration des Metalleinsatzes in das Gehäuse eingebracht werden.

Vorteilhafterweise ist der Stellantrieb auf einer Grundplatte anzuordnen, wobei die Grundplatte einstückig mit dem Metalleinsatz ausgeführt ist. Hierdurch kann beim Betrieb des Stellantriebs entstehende Wärme über die Grundplatte an den Metalleinsatz abgeführt werden, wobei durch das durch die Drosselöffnung hindurchtretende gasförmige Medium eine ausreichende Kühlung des Metalleinsatzes zuverlässig gewährleistet ist.

Die mit der Erfindung erzielten Vorteile bestehen insbesondere darin, daß durch eine spezielle Formgebung der Drosselöffnung im Bewegungsbereich der Drosselklappe und nicht durch eine Veränderung der Form der Drosselklappe und/oder Anordnung der Drosselklappenwelle eine Kennlinie für einen Drosselklappenstutzens erzielbar ist, die einen Bereich abdeckt, der bisher mit bekannten Drosselklappenstutzen nicht erreicht worden ist. Dieser durch die Erfindung neu erschlossene Bereich der Kennlinien für einen Drosselklappenstutzen ist insbesondere bei Drosselklappen mit einem besonders großem Durchmesser von Vorteil, damit diese trotz ihrer Größe eine besonders fein abgestufte Steuerung der Leistung der Brennkraftmaschine zuverlässig gewährleisten.

Ein Ausführungsbeispiel der Erfindung wird anhand einer Zeichnung näher erläutert. Darin zeigen die Figuren:

Fig. 1    schematisch einen Drosselklappenstutzen,

Fig. 2    schematisch einen Schnitt durch den Drosselklappenstutzen gem. Fig.1,

Fig.3    schematisch einen Schnitt durch die Drosselöffnung im Bereich der Drosselklappe und

Fig. 4    eine Übersicht über Kennlinien verschiedener Drosselklappenstutzen.

Einander entsprechende Teile sind in allen Figuren mit den gleichen Bezugszeichen versehen.

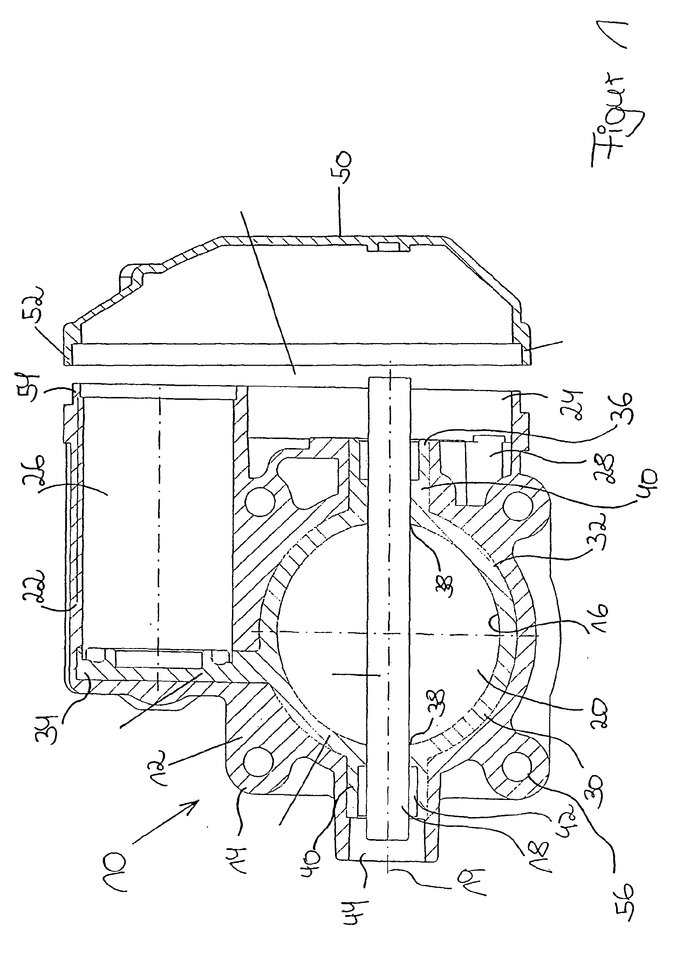

Der Drosselklappenstutzen 10 gemäß Figur 1 dient dazu, einem nicht dargestellten Verbraucher beispielsweise einer Einspritzeinrichtung eines ebenfalls nicht dargestellten Kraftfahrzeugs, ein Luft- oder ein Kraftstoff-Luftgemisch zuzuführen, wobei mittels des Drosselklappenstutzens 10 die dem Verbraucher zuzuführende Frischgasmenge steuerbar ist. Hierzu weist der Drosselklappenstutzen 10 ein Gehäuse 12 auf, das überwiegend aus Kunststoff 14 gefertigt ist und im Spritzgußverfahren hergestellt worden ist. Alternativ kann das Gehäuse 12 jedoch auch vollständig aus Metall, insbesondere Aluminium gefertigt sein. Das Gehäuse 12 weist eine Drosselöffnung 16 auf über die dem nicht dargestellten Verbraucher Luft- bzw. ein Kraftstoff-Luft-Gemisch zuführbar ist. Zur Einstellung des zuzuführenden Volumens des Frischgases ist auf einer Drosselklappenwelle 18 eine Drosselklappe 20 angeordnet. Eine Drehung der Drosselklappenwelle 18 um ihre Drehaches 19 bewirkt gleichzeitig eine Verschwenkung der auf der Drosselklappenwelle 18 angeordnete Drosselklappe 20, wodurch der aktive Querschnitt der Drosselöffnung 16 vergrößert oder verkleinert wird. Mittels einer Vergrößerung oder Verkleinerung des aktiven Querschnitts der Drosselöffnung 16 durch die Drosselklappe 20 erfolgt eine Regulierung des Durchsatzes des Luft- bzw. Kraftstoff-Luftgemischs durch die Drosselöffnung 16 des Drosselklappenstutzen 10.

Die Drosselklappenwelle 18 kann mit einer nicht näher dargestellten Seilscheibe verbunden sein, die wiederum über einen Bowdenzug mit einer Einstellvorrichtung für eine Leistungsanforderung verbunden ist. Die Einstellvorrichtung kann hierbei als Gaspedal eines Kraftfahrzeugs ausgebildet sein, so daß eine Betätigung dieser Einstellvorrichtung durch den Fahrer des Kraftfahrzeugs die Drosselklappe 20 von einer Stellung minimaler Öffnung, insbesondere einer Schließstellung bis in eine Stellung maximaler Öffnung, insbesondere einer Offenstellung, gebracht werden kann, um hierdurch die Leistungsabgabe des Fahrzeugs zu steuern.

Die in Figur 1 gezeigte Drosselklappenwelle 18 des Drosselklappenstutzen 10 ist im Gegensatz dazu entweder in einem Teilbereich von einem Stellantrieb und ansonsten über das Gaspedal einstellbar oder aber die Drosselklappe 10 ist über den gesamten Verstellbereich von einem Stellantrieb einstellbar. Bei diesen sogenannten E-Gas oder Drive-by-wire-Systemen wird die mechanische Leistungssteuerung, beispielsweise Niederdrücken eines Gaspedals, in ein elektrisches Signal umgesetzt. Dieses Signal wird wiederum einer Steuereinheit zugeführt, die ein Ansteuersignal für den Stellantrieb erzeugt. Es gibt bei diesen Systemen im Normalbetrieb keine mechanische Kopplung zwischen dem Gaspedal und der Drosselklappe 20.

Zur Verstellung der Drosselklappenwelle 18 und damit der Drosselklappe 20 weist daher der Drosselklappenstutzen 10 ein Antriebsgehäuse 22 und ein Getriebegehäuse 24 auf. Das Antriebsgehäuse 22 und das Getriebegehäuse 24 sind einstückig mit dem Gehäuse 12 des Drosselklappenstutzen 10 ausgeführt, sie können aber auch insgesamt eine separate einstückige Baueinheit bilden oder aber jedes für sich einstückig ausgeführt sein.

In dem Antriebsgehäuse 22 ist ein als Elektromotor ausgebildeter Stellantrieb 26 angeordnet. Der als Elektromotor ausgebildete Stellantrieb 26 bewegt über ein in dem Getriebegehäuse 24 angeordnetes Untersetzungsgetriebe die Drosselklappenwelle 18. Das Untersetzungsgetriebe ist in der Zeichnung nicht näher dargestellt. Der Stellantrieb 26 ist in nicht näher dargestellter Weise mit einer außerhalb des Drosselklappenstutzens 10 angeordneten Stromquelle und mit einer Steuereinheit verbunden. Die Steuereinheit übermittelt dem Stellantrieb ein Signal, mittels dessen der Stellantrieb 26 eine bestimmte Stellung der Drosselklappenwelle 18 über das Untersetzungsgetriebe herbeiführt. Die tatsächliche Position der Drosselklappenwelle 18 ist über eine als Potentiometer ausgebildete Positionserfassungseinrichtung 28 erfaßbar, bei der der Schleifer des Potentiometers mit der Drosselklappenwelle 18 verbunden ist.

Weiterhin umfaßt der Drosselklappenstutzen 10 gemäß Figur 1 einen Metalleinsatz 30, der aus Metall 32 gefertigt ist, das als Aluminium ausgebildet ist. Der Metalleinsatz 30 ist in die für das Gehäuse 12 des Drosselklappenstutzens 10 vorgesehene Spritzgußform eingelegt worden und mit Kunststoff 14 umspritzt worden. Dabei ist der Bereich des Metalleinsatzes 30, der die Drosselöffnung 16 bildet, nicht von Kunststoff bedeckt worden, so daß im Bereich der Drosselöffnung das als Aluminium ausgebildete Metall 32 die Drosselöffnung 16 bildet.

Der Metalleinsatz 30 ist einstückig mit einem Lagerschild oder Grundplatte 34 ausgebildet, auf der der als Elektromotor ausgebildete Stellantrieb 36 angeordnet ist. Hierdurch ist beim Betrieb des Stellantriebs 26 entstehende Wärme über den Metalleinsatz 30 an die Drosselöffnung 16 abführbar. Weiterhin weist der Metalleinsatz 30 eine Aufnahme 36 auf, auf der die als Potentionmeter ausgebildete Positionserfassungseinrichtung 28 für die Drosselklappenwelle 18 angeordnet ist. Durch die einstückig mit dem Metalleinsatz 30 ausgebildete Aufnahme 36 ist die Justage der als Potentiometer ausgebildeten Positionserfassungseinrichtung 28 besonders einfach, da die Lage der Positionserfassungseinrichtung 28 relativ zur Drosselklappenwelle 18 durch den Metalleinsatz 30 vorgegeben ist.

Der Metalleinsatz 30 weist zwei Durchführungen 38 mit jeweils einem Fortsatz 40 auf. Die beiden Fortsätze 40 sind dafür vorgesehen, Lager 42 für die Drosselklappenwelle 18 aufzunehmen. Hierzu erweist sich das Gehäuse 12 des Drosselklappenstutzens 10 als besonders montagefreundlich, da nach Erstellung des Gehäuses 12 die Lager 42 nur noch in die dafür vorgesehenen Fortsätze 40 einzusetzen sind.

Die Drosselklappenwelle 18 endet auf der einen Seite - gemäß Figur 1 auf der linken Seite - in einen Raum 44, in dem beispielsweise sogenannte Rückstellfedern und/oder Notlauffedern untergebracht sein können. Die Rückstellfedern und/oder Notlauffedern bewirken eine Vorspannung der Drosselklappenwelle in Schließrichtung, so daß der Stellantrieb 26 gegen die Kraft der Rückstellfedern und/oder Notlauffedern arbeitet. Eine sogenannte Notlauffeder bewirkt, daß bei einem Ausfall des Stellantriebs die Drosselklappe 20 in eine definierte Position gebracht wird, die üblicherweise oberhalb der Leerlaufdrehzahl liegt. Alternativ oder zusätzlich kann die Drosselklappenwelle 18 auch über den Raum 44 hinaus aus dem Gehäuse 12 des Drosselklappenstutzen 10 hervorstehen. Dann ist es möglich, beispielsweise eine in der Zeichnung nicht dargestellte Seilscheibe am Ende der Drosselklappenwelle 18 zu montieren, die über einen Bowdenzug mit einem Gaspedal verbunden ist, womit eine mechanische Sollwertvorgabe realisiert wird. Diese mechanische Kopplung der Drosselklappenwelle 18 mit dem in der Zeichnung nicht näher dargestellten Gaspedal kann in Notsituationen, beispielsweise bei einem Ausfall des Stellantriebs 26, einen Betrieb des Drosselklappenstutzens 10 gewährleisten. Das dem Ende des Fortsatzes 14 abgewandte Ende des Raums 44 kann zur Aufnahme weiterer Elemente verwendet werden. Weiterhin können an der Stirnfläche der Fortsätze 40 weitere Ansätze angeordnet sein, die zur Aufnahme zusätzlicher Elemente vorgesehen sind, wie beispielsweise Stegwellen für Zahnräder oder Zahnsegmente des nicht gezeigten Getriebes.

Das Gehäuse 12 des Drosselklappenstutzens 10 ist von einem Gehäusedeckel 50 verschließbar. Hierzu weist das Gehäuse 12 des Drosselklappenstutzens 10 in Richtung des Gehäusedeckels 50 eine umlaufende Abflachung 52 auf, die mit einem umlaufenden Steg 54 des Gehäusedeckels 50 korrespondiert. Die Abflachung 52 und der Steg 54 gewährleisten eine wohldefinierte Lage des Gehäusedeckels 50 auf dem Gehäuse 12. Die beiden einander zugewandten Flächen der Abflachung 52 und des Steges 54 werden nach dem Aufsetzen des Gehäusedeckels 50 auf das Gehäuse 12 über einen Laserstrahl miteinander verschmolzen, wodurch eine nahezu unlösbare Verbindung entsteht. Alternativ kann der Gehäusedeckel 50 jedoch auch auf das Gehäuse 12 aufgeklebt sein. Weiterhin weist das Gehäuse 12 Flanschaugen 56 zur Verbindung mit außerhalb des Drosselklappenstutzens 10 angeordneten Elementen auf, die einstückig mit dem Gehäuse 12 ausgeführt sind.

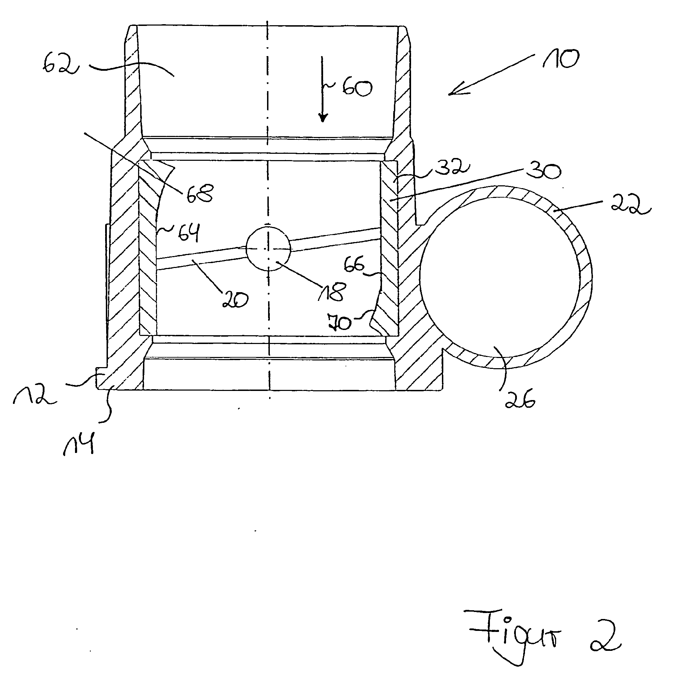

Figur 2 zeigt den Drosselklappenstutzen 10 gemäß Figur 1 schematisch im Längsschnitt. Gemäß Figur 2 ist der Metalleinsatz 30 aus Aluminium gefertigt. Der Metalleinsatz 30 bildet einen Teilbereich der Drosselöffnung 16, die in einer Hauptströmungsrichtung 60 von einem gasförmigen Medium 62 durchströmbar ist. Der Metalleinsatz 30 umfaßt im Bereich der Schließstellung der Drosselkllappe 20 sowohl stromabwärts als auch stromaufwärts der Hauptströmungsrichtung 60 des gasförmigen Mediums 62 jeweils einen geraden Zylinderabschnitt 64 und 66. Die geraden Zylinderabschnitte 64 und 66 sind einstückig ausgeführt, können alternativ aber auch zweistückig ausgeführt sein. An die geraden Zylinderabschnitte 64 und 66 schließt sich jeweils ein Kalottenabschnitt 68 bzw. 70 an. Die Kalottenabschnitte 68 und 70 sind einstückig mit den geraden Zylinderabschnitten 64 und 66 ausgeführt. Der Metalleinsatz 30 umfaßt also in einstückiger Ausführungsform die beiden geraden Zylinderabschnitte 64 und 66 und die beiden Kalottenabschnitte 68 und 70. Alternativ können die geraden Zylinderabschitte 64 und 66 und die Kalottenabschnitte 68 und 70 jedoch auch jeweils einstückig ausgeführt oder paarweise einstückig ausgeführt sein. Der Außenumfang des Metalleinsatzes 30 und zumindest ein Teil seiner Stirnflächen sind von dem Kunststoff 14 des Gehäuses 12 umgeben.

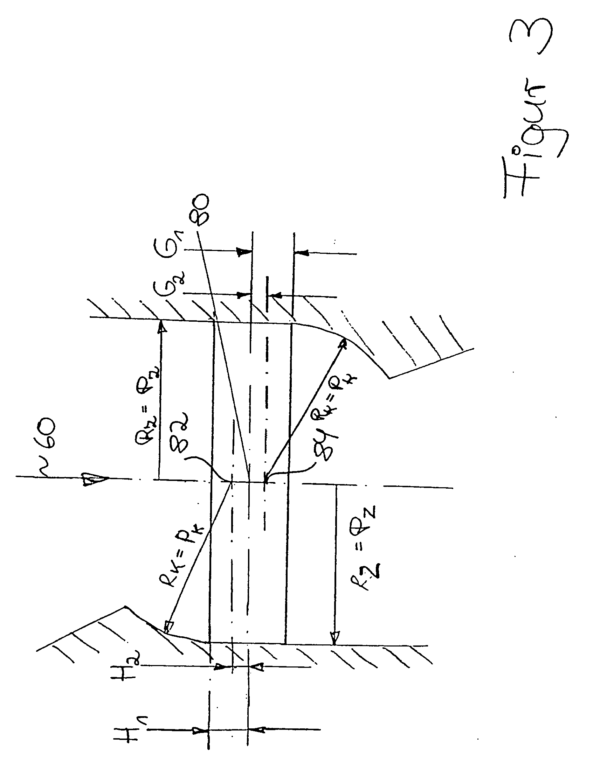

Die Parameter des Metalleinsatzes 30 im Bereich der Drosselklappenwelle 18 zeigt Figur 3. Ausgehend von der Drehachse 19 der Drosselklappenwelle 18 erstreckt sich mit einer Höhe $H_1$ der annähernd gerade Zylinderabschnitt 64 des Metalleinsatzes 30 stromabwärts der Hauptströmungsrichtung 60 des gasförmigen Mediums 62. Der Metalleinsatz 30 weist in diesem Bereich einen Radius $R_Z$ auf. An den annähernd geraden Zylinderabschnitt 64 der Drosselöffnung 16 mit der Höhe $H_1$ schließt sich ausgehend von der Drehachse 19 der Drosselklappenwelle 18 stromaufwärts entgegen der Hauptströmungsrichtung 60 des gasförmigen Mediums 62 ebenfalls ein annähernd gerader Zylinderabschnitt 66 des Metalleinsatzes 30 mit einer Höhe $G_1$ an. Stromabwärts entlang der Hauptströmungsrichtung 60 des gasförmigen Mediums 62 schließt sich an den ersten annähernd geraden Zylinderabschnitt 64 des Metalleinsatzes 30 ein Kalottenabschnitt 68 an. Der Mittelpunkt 82 des Kalottenabschnitts 68 liegt dabei nicht im imaginären Mittelpunkt 80 der Drosselklappenwelle 18. Der Mittelpunkt des Kalottenabschnitts 68 ist um einen Betrag $H_2$ vom imaginären Mittelpunkt 80 der Drosselklappenwelle 18 verschoben. Der Kalottenabschnitt 68 weist einen Radius auf, der der folgenden Gleichung genügt:

$$R_K = [R_Z{}^2 + (H_1 - H_2)^2]^{1/2}.$$

Stromaufwärts entgegen der Hauptströmungsrichtung 60 des gasförmigen Mediums 62 schließt sich an den zweiten annähernd geraden Zylinderabschnitt 66 ebenfalls ein Kalottenabschnitt 70 an. Auch der zweite Kalottenabschnitt 70 weist einen Mittelpunkt 84 auf, der um einen Betrag $G_2$ vom imaginären Mittelpunkt 80 der Drosselklappenwelle 18 verschoben ist. Der Radius des Kalottenabschnitts 70 ist definiert durch die folgende Gleichung:

$$P_K = [P_Z{}^2 + (G_1 - G_2)^2]^{1/2}.$$

In diesem Ausführungsbeispiel ist der Wert von $R_Z$ gleich dem Wert von $P_Z$ und der Wert von $R_K$ gleich dem Wert von $P_K$. Alternativ können die Werte aber auch verschieden oder nur teilweise gleich sein.

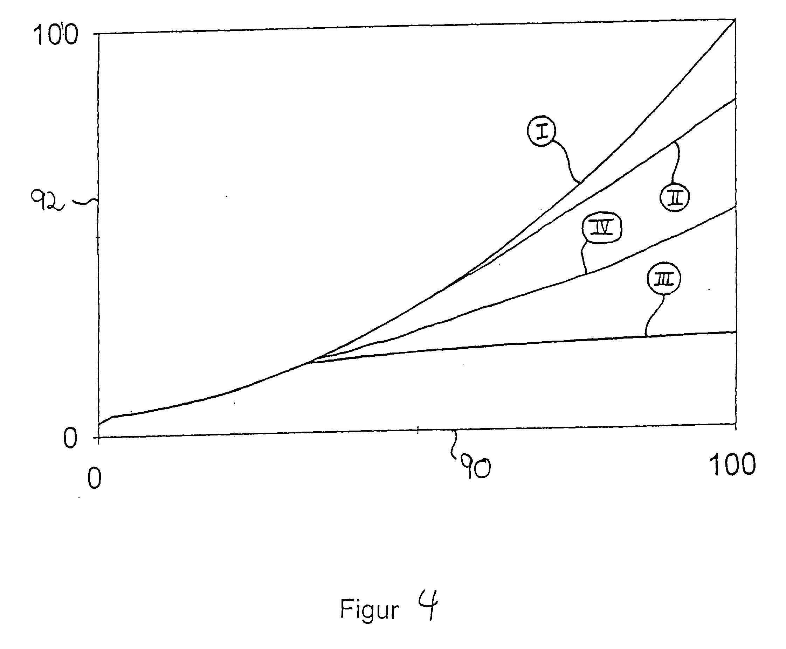

Die Auswirkungen der Parameter des Metalleinsatzes 30 im Bewegungsbereich der Drosselklappenwelle veranschaulicht die Grafik gemäß Figur 4. In der Grafik ist auf der Abszisse der Arbeitsbereich 90 der Drosselklappenwelle 18 in Prozent (%) und auf der Ordinate die durch die Drosselöffnung 16 hindurchtretende Masse 92 an gasförmigem Medium in Prozent (%) angegeben. Die Kennlinie I ist charakteristisch für einen Drosselklappenstutzen, der eine annähernd zylinderförmige Drosselöffnung aufweist. Die Kennlinie II entspricht einem Drosselklappenstutzen, bei dem die Drosselöffnung im Bereich der Drosselklappenwelle sowohl stromaufwärts als auch stromabwärts einen Zylinderabschnitt aufweist, an den sich jeweils, also sowohl stromauf- als auch stromabwärts ein Kalottenabschnitt anschließt. Der Mittelpunkt der Kalotte liegt dabei auf dem Rand des jeweiligen zylinderförmigen Abschnitts in einer Flucht mit dem imaginären Mittelpunkt der Drosselklappenwelle. Die Kennlinie III entspricht einem Drosselklappenstutzen, bei dem die Drosselöffnung im Bereich der Drosselklappenwelle einen zylinderförmigen Abschnitt sowohl stromauf- wie auch stromabwärts der Hauptströmungsrichtung 60 des gasförmigen Mediums 62 aufweist. An den geraden Zylinderabschnitt sowohl stromauf- als auch stromabwärts schließt sich jeweils ein Kalottenabschnitt an. Der Kalottenabschnitt hat hierbei einen Mittelpunkt, der mit dem imaginären Mittelpunkt der Drosselklappenwelle zusammenfällt.

Im Gegensatz dazu weist der Drosselklappenstutzen 10 gemäß den Figuren 1 bis 3 einen Metallaufsatz 30 auf, der sowohl stromaufwärts als auch stromabwärts der Hauptströmungsrichtung 60 des gasförmigen Mediums 62 ausgehend von der Drehachse 19 der Drosselklappenwelle 18 einen geraden Zylinderabschnitt 64 bzw. 66 aufweist. An die beiden geraden Zylinderabschnitte 64 und 66 schließen sich jeweils die Kalottenabschnitte 68 und 70 an. Der Radius der Kalottenabschnitte 68 und 70 ist dabei vom imaginären Mittelpunkt der Drosselklappenwelle 18 beabstandet. Der Radius der Kalottenabschnitte 68 und 70 genügt zumindest einer der oben angegebenen Gleichungen. Die Grafik gemäß Figur 4 zeigt deutlich, daß mit dem Drosselklappenstutzen 10 gemäß der Figuren 1 bis 3 die Kennlinie IV erreichbar ist, die außerhalb des bisher üblichen Bereichs der Kennlinien liegt. Hierdurch ist auch für Drosselklappen mit einem besonders großen Durchmesser eine fein abgestufte Steuerung des durch die Drosselöffnung 16 hindurchtretenden gasförmigen Mediums 62 zuverlässig gewährleistet.

## Patentansprüche

1.   Drosselklappenstutzen (10) mit einem Gehäuse (12), das eine von einem gasförmigen Medium (62) in einer Hauptströmungsrichtung (60) durchströmbare durchgehende Drosselöffnung (16) aufweist, wobei in der Drosselöffnung (16) eine auf einer Drosselklappenwelle (18) schwenkbar befestigte Drosselklappe (20) angeordnet ist, wobei die Drosselklappenwelle (18) von einem in dem Gehäuse (12) angeordneten Stellantrieb (26) verschwenkbar ist, wobei ausgehend von der Drehachse (19) der Drosselklappenwelle (18) stromabwärts entlang der Hauptströmungsrichtung (60) des gasförmigen Mediums (62) die Drosselöffnung (16) einen annähernd geraden Zylinderabschnitt (64) mit einer Höhe $H_1$ und einem Radius $R_Z$ aufweist und wobei sich an den annähernd geraden Zylinderabschnitt (64) ein Kalottenabschnitt (68) anschließt, **dadurch gekennzeichnet, daß** der Kalottenabschnitt (68) einen Mittelpunkt (82) aufweist, der von der Drehachse (19) der Drosselklappenwelle (18) stromabwärts entlang der Hauptströmungsrichtung (60) des gasförmigen Mediums (62) um einen Abstand $H_2$ ver-

schoben ist, wobei der Kalottenabschnitt (68) einen Radius $R_K$ aufweist, der annähernd durch die folgende Gleichung bestimmt ist:

$$R_K = [R_Z{}^2 + (H_1 - H_2)^2]^{1/2}.$$

2. Drosselklappenstutzen (10) nach Anspruch 1, bei dem ausgehend von der Drehachse (19) der Drosselklappenwelle (18) stromaufwärts entgegen der Hauptströmungsrichtung (60) des gasförmigen Mediums (62) die Drosselöffnung (16) einen annähernd geraden Zylinderabschnitt (66) mit einer Höhe $G_1$ und einem Radius $P_Z$ aufweist, wobei sich an den annähernd geraden Zylinderabschnitt (66) ein Kalottenabschnitt (70) anschließt, **dadurch gekennzeichnet, daß** der Kalottenabschnitt (70) einen Mittelpunkt (84) aufweist, der ausgehend von der Drehachse (19) der Drosselklappenwelle (18) stromaufwärts entlang der Hauptströmungsrichtung (60) des gasförmigen Mediums (62) um einen Abstand $G_2$ verschoben ist, wobei der Kalottenabschnitt (70) einen Radius $P_K$ aufweist, der annähernd durch die folgende Gleichung bestimmt ist:

$$P_K = [P_Z{}^2 + (G_1 - G_2)^2]^{1/2}.$$

3. Drosselklappenstutzen (10) nach Anspruch 1 oder 2 **dadurch gekennzeichnet, daß** der Wert von $R_Z$ gleich dem Wert von $P_Z$ und der Wert von $R_K$ gleich dem Wert von $P_K$ ist.

4. Drosselklappenstutzen (10) nach einem der Ansprüche 1 bis 3 **dadurch gekennzeichnet, daß** das Gehäuse (12) im Spritzgußverfahren hergestellt ist und überwiegend aus Kunststoff (14) besteht, wobei zumindest der gerade Zylinderabschnitt (64, 66) durch einen in das Gehäuse (12) integrierten Metalleinsatz (30) gebildet ist.

5. Drosselklappenstutzen (10) nach einem der Ansprüche 1 bis 4 **dadurch gekennzeichnet, daß** der Kalottenabschnitt (68, 70) durch einen in das Gehäuse (12) integrierten Metalleinsatz (30) gebildet ist.

6. Drosselklappenstutzen (10) nach Anspruch 5 **dadurch gekennzeichnet, daß** der gerade Zylinderabschnitt (64, 66) und der Kalottenabschnitt (68, 70) durch einen einstückigen Metalleinsatz (30) gebildet sind.

7. Drosselklappenstutzen (10) nach einem der Ansprüche 4 bis 6 **dadurch gekennzeichnet, daß** der Metalleinsatz (30) zur Aufnahme der Lager (42) der Drosselklappenwelle (18) ausgebildet ist.

8. Drosselklappenstutzen (10) nach einem der Ansprüche 4 bis 7 **dadurch gekennzeichnet, daß** die Drosselklappenwelle (18) eine Positionserfassungseinrichtung (28) aufweist, die in einer Aufnahme (36) im Metalleinsatz (30) aufnehmbar ist.

9. Drosselklappenstutzen (10) nach einem der Ansprüche 4 bis 7 **dadurch gekennzeichnet, daß** der Stellantrieb (26) auf einer Grundplatte (34) anzuordnen ist, wobei die Grundplatte (34) einstückig mit dem Metalleinsatz (30) ausgeführt ist.

## Claims

1. Throttle-valve assembly (10) having a housing (12), which has a continuous throttle opening (16) through which a gaseous medium (62) can flow in a main flow direction (60), in which a throttle valve (20) fastened pivotably on a throttle-valve shaft (18) is arranged in the throttle opening (16), in which the throttle-valve shaft (18) can be pivoted by an actuator (26) arranged in the housing (12), in which, starting from the axis of rotation (19) of the throttle-valve shaft (18) downstream along the main flow direction (60) of the gaseous medium (62), the throttle opening (16) has an approximately straight cylinder section (64) with a height $H_1$ and a radius $R_Z$ and in which a spherical-cap section (68) adjoins the approximately straight cylinder section (64), **characterized by** the fact that the spherical-cap section (68) has a central point (82) which, from the axis of rotation (19) of the throttle-valve shaft (18) downstream along the main flow direction (60) of the gaseous medium (62), is displaced by a distance $H_2$, with the spherical-cap section (68) having a radius $R_K$ which is approximately determined by the following equation:

$$R_K = \left[R_Z{}^2 + (H_1 - H_2)^2\right]^{1/2}.$$

2. Throttle-valve assembly (10) according to Claim 1, in which, starting from the axis of rotation (19) of the throttle-valve shaft (18) upstream counter to the main flow direction (60) of the gaseous medium (62), the throttle opening (16) has an approximately straight cylinder section (66) with a height $G_1$ and a radius $P_Z$, in which a spherical-cap section (70) adjoins the approximately straight cylinder section (66), **characterized by** the fact that the spherical-cap section (70) has a central point (84) which, starting from the axis of rotation (19) of the throttle-valve shaft (18) upstream along the main flow direction (60) of the gaseous medium (62), is displaced by a distance $G_2$, with the spherical-cap section (70) having a radius

$P_K$ which is approximately determined by the following equation:

$$P_K = \left[ P_Z^2 + (G_1 - G_2)^2 \right]^{\frac{1}{2}}.$$

3. Throttle-valve assembly (10) according to Claim 1 or 2, **characterized by** the fact that the value of $R_Z$ is equal to the value of $P_Z$ and the value of $R_K$ is equal to the value of $P_K$.

4. Throttle-valve assembly (10) according to one of Claims 1 to 3, **characterized by** the fact that the housing (12) is produced by injection moulding and is predominantly made of plastic (14), with at least the straight cylinder section (64, 66) being formed by a metal insert (30) integrated in the housing (12).

5. Throttle-valve assembly (10) according to one of Claims 1 to 4, **characterized by** the fact that the spherical-cap section (68, 70) is formed by a metal insert (30) integrated in the housing (12).

6. Throttle-valve assembly (10) according to Claim 5, **characterized by** the fact that the straight cylinder section (64, 66) and the spherical-cap section (68, 70) are formed by a single-piece metal insert (30).

7. Throttle-valve assembly (10) according to one of Claims 4 to 6, **characterized by** the fact that the metal insert (30) is constructed so as to hold the bearings (42) of the throttle-valve shaft (18).

8. Throttle-valve assembly (10) according to one of Claims 4 to 7, **characterized by** the fact that the throttle-valve shaft (18) has a position detection device (28) which can be held in a holder (36) in the metal insert (30).

9. Throttle-valve assembly (10) according to one of Claims 4 to 7, **characterized by** the fact that the actuator (26) is to be arranged on a base plate (34), the base plate (34) being constructed as a single piece with the metal insert (30).

**Revendications**

1. Tubulure (10) à papillon de régulation des gaz ayant un corps (12) qui comporte une ouverture de régulation (16) traversante à travers laquelle un fluide gazeux (62) peut circuler dans une direction principale d'écoulement (60), où, dans l'ouverture de régulation, un papillon de régulation des gaz est fixé sur un arbre de papillon de régulation des gaz, de telle manière qu'il peut pivoter, l'arbre (18) du papillon de régulation des gaz pouvant tourner sous l'effet d'un actionneur (26) monté dans le corps (12) de la tubulure, l'ouverture de régulation (16) ayant, en partant de l'axe de rotation (19) de l'arbre (18) du papillon de régulation des gaz dans le sens aval le long de la direction principale d'écoulement (60) du fluide gazeux (62), une section cylindrique (64) approximativement rectiligne de hauteur $H_1$ et de rayon $R_Z$ et la section cylindrique (64) approximativement rectiligne étant suivie d'une section en calotte sphérique (68), **caractérisée par le fait que** la section en calotte sphérique (68) a un centre (82) qui est décalé d'une distance $H_2$ de l'axe de rotation (19) de l'arbre (18) du papillon de régulation des gaz dans le sens aval le long de la direction principale d'écoulement (60) du fluide gazeux (62), alors que la section en calotte sphérique (68) a un rayon $R_K$ qui est approximativement déterminé par l'équation suivante:

$$R_K = \left[ R_Z^2 + (H_1 - H_2)^2 \right]^{\frac{1}{2}}.$$

2. Tubulure (10) à papillon de régulation des gaz selon la revendication 1 dans laquelle, en partant de l'axe de rotation (19) de l'arbre (18) du papillon de régulation des gaz dans le sens amont à l'inverse de la direction principale d'écoulement (60) du fluide gazeux (62), l'ouverture de régulation (16) comporte une section cylindrique (66) approximativement rectiligne ayant une hauteur $G_1$ et un rayon $P_Z$, la section cylindrique (66) approximativement rectiligne étant suivie d'une section en calotte sphérique (70), **caractérisée par le fait que** la section en calotte sphérique (70) a un centre (84) qui est décalé d'une distance $G_2$, en partant de l'axe de rotation (19) de l'arbre (18) du papillon de régulation des gaz dans le sens amont le long de la direction principale d'écoulement (60) du fluide gazeux (62), alors que la section en calotte sphérique (70) a un rayon $P_K$ qui est déterminé approximativement par l'équation suivante:

$$P_K = \left[ P_Z^2 + (G_1 - G_2)^2 \right]^{\frac{1}{2}}.$$

3. Tubulure (10) à papillon de régulation des gaz selon la revendication 1 ou 2 **caractérisée par le fait que** la valeur de $R_Z$ est égale à la valeur de $P_Z$ et la valeur de $R_K$ est égale à la valeur de $P_K$.

4. Tubulure (10) à papillon de régulation des gaz selon l'une des revendications 1 à 3 **caractérisée par le fait que** le corps (12) de la tubulure est fabriqué par un procédé de moulage par injection et se compose principalement de matière plastique (14), alors que au moins la section cylindrique rectiligne (64, 66) est formée par un insert (30) en métal intégré dans le corps (12) de la tubulure.

5. Tubulure (10) à papillon de régulation des gaz selon l'une des revendications 1 à 4 **caractérisée par le fait que** la section en calotte sphérique (68, 70) est formée par un insert (30) en métal intégré dans le corps (12) de la tubulure.

6. Tubulure (10) à papillon de régulation des gaz selon la revendication 5 **caractérisée par le fait que** la section cylindrique rectiligne (64, 66) et la section en calotte sphérique (68, 70) sont formées par un insert (30) en métal en une seule pièce.

7. Tubulure (10) à papillon de régulation des gaz selon l'une des revendications 4 à 6 **caractérisée par le fait que** l'insert (30) en métal est conçu pour recevoir les paliers (42) de l'arbre (18) du papillon de régulation des gaz.

8. Tubulure (10) à papillon de régulation des gaz selon l'une des revendications 4 à 7 **caractérisée par le fait que** l'arbre (18) du papillon de régulation des gaz comporte un dispositif (28) de détermination de la position qui peut être monté sur un support (36) dans l'insert (30) en métal.

9. Tubulure (10) à papillon de régulation des gaz selon l'une des revendications 4 à 7 **caractérisée par le fait que** l'actionneur (26) est à monter sur une plaque de base (34), la plaque de base (34) étant exécutée en une seule pièce avec l'insert (30) en métal.

Figur 1

Figur 2

Figur 3

Figur 4